(19) Europäisches Patentamt
European Patent Office
Office européen des brevets

(11) **EP 3 287 736 B1**

(12) **EUROPEAN PATENT SPECIFICATION**

(45) Date of publication and mention
of the grant of the patent:
**08.12.2021 Bulletin 2021/49**

(51) Int Cl.:
*F41G 3/06* *(2006.01)*    *F41G 3/16* *(2006.01)*
*F41G 3/22* *(2006.01)*    *F41G 3/04* *(2006.01)*
*G01S 5/14* *(2006.01)*

(21) Application number: **17174021.0**

(22) Date of filing: **01.06.2017**

(54) **DYNAMIC, PERSISTENT TRACKING OF MULTIPLE FIELD ELEMENTS**

DYNAMISCHE PERSISTENTE VERFOLGUNG MEHRERER FELDELEMENTE

SUIVI DYNAMIQUE ET PERSISTANT DE MULTIPLES ÉLÉMENTS DE CHAMP

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.08.2016 US 201615246057**

(43) Date of publication of application:
**28.02.2018 Bulletin 2018/09**

(73) Proprietor: **The Boeing Company
Chicago, IL 60606-2016 (US)**

(72) Inventor: **GUTHRIE, Richard Bernard
Chicago, IL 60606-1596 (US)**

(74) Representative: **Plasseraud IP
66, rue de la Chaussée d'Antin
75440 Paris Cedex 09 (FR)**

(56) References cited:
WO-A1-2015/066531    US-A- 6 064 942
US-A1- 2008 049 012    US-B1- 8 275 544
US-B1- 8 939 366

**Description**

TECHNOLOGICAL FIELD

The present disclosure relates generally to a targeting system and, in particular, to a targeting system with dynamic, persistent tracking of multiple field elements.

BACKGROUND

Battlefield situations can be complex, with multiple targets and multiple offensive weapons available. Friendly forces or non-combatants may be present in close proximity to targets. Spotters in forward positions can be used to identify targets but it can be difficult to know which targets have already been identified. Further, more than one spotter may be present so that the same target may be identified more than once while other targets may be skipped over.

Therefore it would be desirable to have a system and method that takes into account at least some of the issues discussed above, as well as other possible issues.

Concerning the available background art:

US8939366B1 discloses systems and methods for displaying information on a targeting display. The disclosed method comprises (i) positioning a targeted object proximate a center of a targeting display image and providing a reticle below the target object. The reticle is configured to identify the targeted object to a user of the targeting display (ii) providing a first plurality of data elements positioned along a vertical axis upon which the targeted object and reticle are also positioned. The first plurality of data elements include a range to the target, an azimuth to the target, and one or more error estimates relating to at least one of the range to the target or the azimuth to the target. (iii) providing a second plurality of data elements within a plurality of areas positioned proximate to one or more borders of the targeting display image.

WO2015066531A1 discloses a remote targeting system including a weapon, a display on the weapon, a radio frequency receiver, a sensor remote from the weapon, wherein the sensor is configured to provide image metadata of a predicted impact point B on the weapon display, and a targeting device including a data store having ballistic information associated with a plurality of weapons and associated rounds, and a fire control controller wherein the fire control controller determines a predicted impact point B based on the ballistic information, elevation data received from an inertial measurement unit, azimuth data received from a magnetic compass, position data received from a position determining component, wherein the fire control controller is in communication with the inertial measurement unit, the magnetic compass, and the position determining component.

US2008049012A1 discloses a decision support tool for 3D LOS visualization in user interactive 3D virtual reality environments for enabling true 3D LOS analysis for assisting decision making in a wide range of applications including inter alia land development projects, military operational planning, sensor placement in surveillance systems, and the like. The intended uses is displaying cross sections of 3D virtual reality scenes, and determination of the minimum elevation of an origin node for ensuring a single continuous unobstructed 3D LOS with each target node of at least one stationary target node.

BRIEF SUMMARY

Example implementations of the present disclosure provide a targeting system and method that relies on sensor and calculated angles of incidences to determine and track the geographic location of field elements such as targets, landmarks or friendly forces. As the targeting system is moved, the system may keep track of the field element and provide an indicator associated with a view of the field element. In some examples, the targeting system may be used in a network of interconnected systems including multiple targeting systems that may classify field elements in an environment, and share those designations across the network to increase the efficiency of sharing field element locations and classifications. In the context of a battlefield environment, this may also enable quicker identification of friendly forces in the vicinity of a target or targets.

The present disclosure is defined by independent claims 1 and 10.

Further, optional implementations are defined by the dependent claims, examples of which are given below. For example, in relation to the targeting system of claim 1, the attitude determination unit is configured to persistently measure the attitude, and the processing circuitry is configured to persistently receive the attitude, and programmed to persistently determine the relative LOS based on the attitude, determine the relative position in the live view based on the relative LOS, and cause the personal display system to display the primary view including the icon at the relative position.

In another example implementations of the targeting system of any preceding or any subsequent example implementation, or any combination thereof, the targeting system further comprises a memory storing a classification of the field element, the classification being of a plurality of classifications associated with a respective plurality of icons, wherein the processing circuitry is further configured to access the memory, and programmed to cause the personal display system to display the primary view including the icon associated with the classification of the field element.

In another example implementations of the targeting system of any preceding or any subsequent example implementation, or any combination thereof, the processing circuitry is programmed to cause the personal display system to display the primary view further including a notification regarding the field element in an instance in which the relative position and the center of the field of view are co-aligned, the notification being selected from a plurality of notifications based on the classification of the field element.

In another example implementations of the targeting system of any preceding or any subsequent example implementation, or any combination thereof, the field element is one of a plurality of field elements in the physical environment, and the memory stores a classification of each of the plurality of field elements, wherein the processing circuitry is programmed to determine the relative LOS from the targeting system to each of the plurality of field elements, and wherein the processing circuitry is further programmed to identify the field element as having a relative position within the field of view based on the relative LOS from the targeting system to the field element.

In another example implementations of the targeting system of any preceding or any subsequent example implementation, or any combination thereof, the processing circuitry is further programmed to identify another field element as having a relative position outside the field of view based on the relative LOS from the targeting system to the other field element, and wherein the processing circuitry is programmed to cause the personal display system to display the primary view that further includes an arrow indicating a turning direction from the LOS of the targeting system to the other field element.

In another example implementations of the targeting system of any preceding or any subsequent example implementation, or any combination thereof, the processing circuitry is further programmed to cause the personal display system to display a secondary view that also overlays and thereby further augments the live view, the secondary view depicting an area of the environment surrounding the targeting system, and including icons that represent the targeting system and field element.

In another example implementations of the targeting system of any preceding or any subsequent example implementation, or any combination thereof, the targeting system further comprises a memory storing a classification that identifies the field element as a target, and information that indicates a munition assigned to the target, and a minimum safe distance associated with the munition, and wherein the processing circuitry is further configured to access the memory, and programmed to cause the personal display system to display the secondary view including an indicator that indicates the minimum safe distance relative to the target.

In another example implementations of the targeting system of any preceding or any subsequent example implementation, or any combination thereof, the secondary view is centered on the icon that represents the targeting system, wherein the processing circuitry is further programmed to determine a distance from the targeting system to the field element based on the geographic location of the targeting system and the geographic location of the field element, and wherein the processing circuitry is programmed to cause the personal display system to display the secondary view centered on the icon that represents the targeting system, and in which the icon that represents the field element is positioned relative to the center of the secondary view based on the distance from the targeting system to the field element, and the relative LOS from the targeting system to the field element.

For example, in relation to the method of claim 10, the method further comprises measuring the attitude, determining the relative LOS, determining the relative position and displaying the primary view are performed persistently.

In another example implementations of the method of any preceding or any subsequent example implementation, or any combination thereof, the field element has a classification of a plurality of classifications associated with a respective plurality of icons, and wherein displaying the primary view includes displaying the primary view including an icon associated with the classification of the field element.

In another example implementations of the method of any preceding or any subsequent example implementation, or any combination thereof, displaying the primary view includes displaying the primary view further including a notification regarding the field element in an instance in which the relative position and the center of the field of view are co-aligned, the notification being selected from a plurality of notifications based on the classification of the field element.

In another example implementations of the method of any preceding or any subsequent example implementation, or any combination thereof, the field element is one of a plurality of field elements in the physical environment, and each of the plurality of field elements have a classification, wherein determining the relative LOS includes determining the relative LOS from the targeting system to each of the plurality of field elements, and wherein the method further comprises identifying the field element as having a relative position within the field of view based on the relative LOS from the targeting system to the field element.

In another example implementations of the method of any preceding or any subsequent example implementation, or any combination thereof, the method further comprises identifying another field element as having a relative position outside the field of view based on the relative LOS from the targeting system to the other field element, and wherein displaying the primary view includes displaying the primary view that further includes an arrow indicating a turning direction from the LOS of the targeting system to the other field element.

In another example implementations of the method of any preceding or any subsequent example implementation, or any combination thereof, the method further comprises displaying a secondary view that also overlays and thereby further augments the live view, the secondary view depicting an area of the environment surrounding the targeting system, and including icons that represent the targeting system and field element.

In another example implementations of the method of any preceding or any subsequent example implementation, or any combination thereof, the field element has a classification that identifies the field element as a target, a munition is assigned to the target, and the munition has a minimum safe distance associated therewith, and wherein displaying the secondary view includes displaying the secondary view including an indicator that indicates the minimum safe distance relative to the target.

In another example implementations of the method of any preceding or any subsequent example implementation, or any combination thereof, the secondary view is centered on the icon that represents the targeting system, wherein the method further comprises determining a distance from the targeting system to the field element based on the geographic location of the targeting system and the geographic location of the field element, and wherein displaying the secondary view includes displaying the secondary view centered on the icon that represents the targeting system, and in which the icon that represents the field element is positioned relative to the center of the secondary view based on the distance from the targeting system to the field element, and the relative LOS from the targeting system to the field element.

These and other features, aspects, and advantages of the present disclosure will be apparent from a reading of the following detailed description together with the accompanying drawings, which are briefly described below. The present disclosure includes any combination of two, three, four or more features or elements set forth in this disclosure, regardless of whether such features or elements are expressly combined or otherwise recited in a specific example implementation described herein. This disclosure is intended to be read holistically such that any separable features or elements of the disclosure, in any of its aspects and example implementations, should be viewed as intended, namely to be combinable, unless the context of the disclosure clearly dictates otherwise.

It will therefore be appreciated that this Brief Summary is provided merely for purposes of summarizing some example implementations so as to provide a basic understanding of some aspects of the disclosure. Other example implementations, aspects and advantages will become apparent from the following detailed description taken in conjunction with the accompanying drawings which illustrate, by way of example, the principles of some described example implementations.

BRIEF DESCRIPTION OF THE DRAWING(S)

Having thus described example implementations of the disclosure in general terms, reference will now be made to the accompanying drawings, which are not necessarily drawn to scale, and wherein:

FIG. 1 illustrates a targeting system according to various example implementations of the present disclosure;
FIG. 2 illustrates a simplified battlefield environment in a map view providing context for example implementations;
FIGS. 3 and 4 depict screens of a display device of the targeting system of FIG. 1, in the context of a battlefield environment such as that shown in FIG. 2, according to example implementations;
FIG. 5 is a flowchart illustrating various steps in a method according to various example implementations;
FIG. 6 is a flowchart illustrating various steps in a method according to more particular example implementations;
FIG. 7 is a diagram depicting a frame of reference (i.e., a Cartesian coordinate system) in which an azimuth angle (az) and an elevation angle (el) are defined;
FIG. 8 is a diagram depicting an Earth-centered, Earth-fixed (ECEF) frame of reference with defining parameters for the reference system used by GPS and a graphic representing an Earth Model; and
FIG. 9 is a diagram representing a plane formed from the ECEF Z axis and a point representing a location of an object of interest.

DETAILED DESCRIPTION

Some implementations of the present disclosure will now be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. For example, unless otherwise indicated, reference something as being a first, second or the like should not be construed to imply a particular order. Also, something may be described as being above something else (unless otherwise indicated) may instead be below, and vice versa; and similarly, something described as being to the left of something else may instead be to the right, and vice versa. Like reference numerals refer to like elements throughout.

Example implementations of the present disclosure are generally directed to a targeting system and, in particular, to a targeting system with dynamic, persistent tracking of multiple field elements in an environment of the targeting system. For the purpose of this disclosure, a field element is any object or personnel unit (single or group) that is identifiable and classifiable. Example implementations will be primarily described in the context of a battlefield environment, and in this context, the field element may be a target, landmark, friendly force or the like.

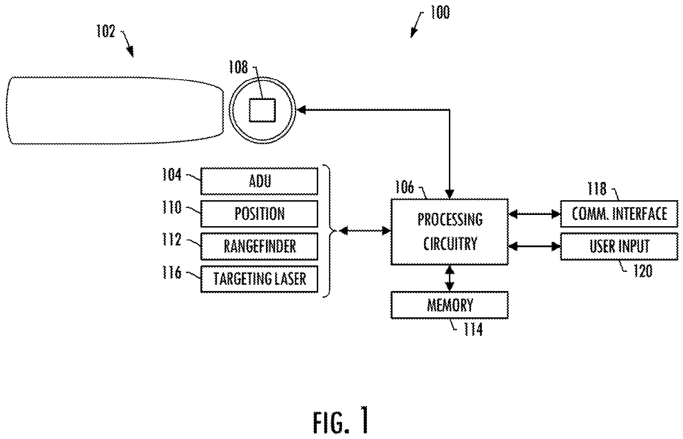

FIG. 1 illustrates a targeting system **100** for use in a physical environment including a field element, according to some example implementations of the present disclosure. According to example implementations, the targeting system includes one or more of each of a number of components. As shown, the targeting system includes a personal display system **102** (both profile and end views schematically shown), an attitude determination unit (ADU) **104** (also known as an attitude reference), and processing circuitry **106.** In some example implementations, the personal display system **102** is configured to generate or enable a live view of the physical environment, with the live view including the field element and having a field of view centered on a line of sight (LOS) of the targeting system (the direction the targeting system is pointing).

According to various implementations described herein, the personal display system **102** may include a display device **108** and enable augmented reality functionality in which the live view is augmented with computer-generated input. The personal display system may therefore take any of a number of different forms suitable for augmented reality, and may be wearable (e.g., head-mounted), handheld or otherwise mobile. In some examples, the personal display system may take the form of augmented reality eyeglasses, telescopes and the like, in which the personal display system may enable a direct live view of the environment. Examples of suitable telescopes include optical telescopes such as spotting scopes, monoculars, binoculars and the like.

In some examples, the personal display system **102** may take the form of or otherwise include an imaging system configured to generate images or video and thereby an indirect live view of the environment. One example of a suitable imaging system is a camera such as a digital camera, infrared camera, thermal camera, depth-aware or range camera, stereo camera or the like, which may be adjustable for parameters such as field-of-view, magnification and the like. In some examples, AR glasses or a telescope may be equipped with an imaging system and thereby generate an indirect live view of the environment, instead of a direct live view. The display device **108** may likewise be any of a number of different display devices suitable to the form of the personal display system. Examples of suitable display devices include image projectors, video projectors, or any of a number of other more conventional display devices such as liquid crystal displays (LCD), light-emitting diode displays (LED), plasma display panels (PDP) and the like.

The ADU **104** is configured to measure an attitude of the targeting system in an azimuth and elevation that describe the LOS of the targeting system **100,** and in a tilt of the targeting system. The ADU may include any of a number of different instruments, sensors and the like. For example, the ADU may include a compass such as a digital compass to measure the azimuth of the targeting system with respect to a known direction such as magnetic north. The ADU may likewise include accelerometers or other suitable sensors to measure the elevation and tilt of the targeting system with respect to gravity, with results expressed relative to gravity's orthogonal plane, i.e., level. In other examples, the ADU may employ other attitude determination techniques such as multiple position sensors mounted in a known pattern, or manual entry of azimuth, elevation and tilt.

The processing circuitry **106** may operate alone or in some examples may be a component of a computer system that enables greater functionality. One example of a suitable computer system is described below. In accordance with some example implementations, the processing circuitry is configured to receive the attitude from the ADU **104.** The processing circuitry is programmed to determine a relative LOS from the targeting system **100** to the field element based on the attitude and a geographic location (also known as an absolute location) of the targeting system, and a geographic location of the field element. The processing circuitry is programmed to determine a relative position in the live view from the center of the field of view to the field element therein based on the relative LOS. And the processing circuitry is programmed to cause the personal display system **102** to display (using the display device **108)** a primary view that overlays and thereby augments the live view, the primary view including an icon at the relative position that thereby overlays the field element in the live view.

In some example implementations of the targeting system **100,** the ADU **104** is configured to persistently measure the attitude. In at least some of these examples, the processing circuitry **106** is configured to persistently receive the attitude, and programmed to persistently determine the relative LOS based on the attitude, determine the relative position in the live view based on the relative LOS, and cause the personal display system **102** to display the primary view including the icon at the relative position.

In some example implementations, the targeting system **100** may be configured to determine its own geographic location or otherwise self-locate, and in this regard, the targeting system further include one or more position sensors **110,** a rangefinder **112** or the like, or its geographic location may be manually input. The position sensors can include any of a number of suitable sensors that support various positioning technologies such as satellite-based navigation (e.g., GPS, GLONASS), inertial navigation, Wi-Fi-based positioning, RFID-based positioning, dead-reckoning, association with a known location, triangulation base on landmark locations, and the like. The rangefinder may be of any of a number of suitable types such as a laser rangefinder that uses a laser beam to determine range or distance. Other suitable rangefinder technologies include optical triangulation, radio frequency ranging, photogrammetry with known object identification, and the like.

In addition to or in lieu of position sensors **110,** the rangefinder **112** may be co-aligned with the LOS of the targeting system **100** on which the field of view of the live view is centered, and may be used to support self-location of the targeting system. In some example implementations, the rangefinder **112** is configured to measure a range from the targeting system to a landmark in the physical environment. In at least some of these examples, the processing circuitry **106** is further programmed to determine the geographic location of the targeting system based on the attitude of the targeting system, the range from the targeting system to the landmark, and a geographic location of the landmark. More information regarding self-location of the targeting system is provided below and in the above-cited and incorporated '266 application.

In some example implementations, the targeting system **100** further includes a memory **114** storing a classification of the field element, with the classification being of a plurality of classifications associated with a respective plurality of icons. In at least some of these examples, the processing circuitry **106** is further configured to access the memory, and programmed to cause the personal display system **102** to display the primary view including the icon associated with the classification of the field element.

In some further examples, the processing circuitry **106** is programmed to cause the personal display system **102** to display the primary view further including a notification regarding the field element in an instance in which the relative position and the center of the field of view are co-aligned, with the notification being selected from a plurality of notifications based on the classification of the field element.

Additionally or alternatively, in some further examples, the field element is one of a plurality of field elements in the physical environment, and the memory **114** stores a classification of each of the plurality of field elements. In at least some of these examples, the processing circuitry **106** is programmed to determine the relative LOS from the targeting system **100** to each of the plurality of field elements; and further programmed to identify the field element as having a relative position within the field of view based on the relative LOS from the targeting system to the field element.

In some yet further examples, the processing circuitry **106** is further programmed to identify another field element as having a relative position outside the field of view based on the relative LOS from the targeting system **100** to the other field element. In at least some of these examples, the processing circuitry is programmed to cause the personal display system **102** to display the primary view that further includes an arrow indicating a turning direction from the LOS of the targeting system to the other field element.

In some example implementations of the targeting system **100,** the processing circuitry **106** is further programmed to cause the personal display system **102** to display a secondary view that also overlays and thereby further augments the live view, with the secondary view depicting an area of the environment surrounding the targeting system, and including icons that represent the targeting system and field element.

In some further examples in which the memory **114** stores a classification that identifies the field element as a target, the memory further stores information that indicates a munition assigned to the target, and a minimum safe distance associated with the munition. In at least some of these examples, the processing circuitry **106** is further configured to access the memory, and programmed to cause the personal display system **102** to display the secondary view including an indicator that indicates the minimum safe distance relative to the target.

Additionally or alternatively, in some further examples, the secondary view is centered on the icon that represents the targeting system, and the processing circuitry **106** is further programmed to determine a distance from the targeting system **100** to the field element based on the geographic location of the targeting system and the geographic location of the field element. In at least some of these examples, the processing circuitry is programmed to cause the personal display system **102** to display the secondary view centered on the icon that represents the targeting system, and in which the icon that represents the field element is positioned relative to the center of the secondary view based on the distance from the targeting system to the field element, and the relative LOS from the targeting system to the field element.

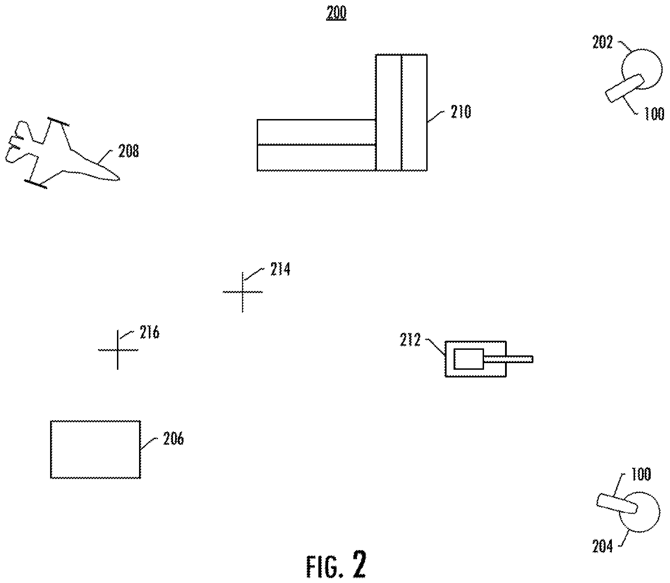

To further illustrate various example implementations in which the targeting system **100** is particularly useful in a battlefield environment, reference is now made to FIGS. 2, 3 and 4. FIG. 2 illustrates a simplified battlefield environment **200** in a map (overhead) view, and in which a network of interconnected tactical units (sometimes referred to as tactical field units) including multiple targeting systems may be useful. As shown, the battlefield environment may include first and second spotters **202, 204** carrying respective targeting systems, and a command hub 206 that in some examples may coordinate information passed between the spotters and with other tactical units such as an aircraft **208.** Additionally or alternatively, the spotters may be in direct communication.

The battlefield environment **200** includes a number of field elements, which as indicated above, may include targets, landmarks, friendly forces and the like. As shown, for example, a building **210** may be categorized as a landmark, as may other relatively-fixed features such as antenna towers, bridges, natural features, long-term encampments, etc. FIG. 2 illustrates a target **212** in the form of a tank, as well as first and second friendly forces **214, 216.** The friendly forces may range from individual troops or other spotters to platoon or larger sized troop groups, field artillery units, tanks, transports, etc. The aircraft **208** is representative of various observation and offensive capabilities available in a battlefield environment. Other examples include, but are not limited to, mortar, artillery, and rocket units. While a limited number of field elements are illustrated for simplicity, in practice, many more such elements may be present. In various examples, the targeting system **100** may simultaneously display 100 field elements and store relevant information for 1000 field elements.

In accordance with example implementations, the targeting system **100** may be configured for use by an operator such as a spotter **202, 204** in the battlefield environment **200** to mark a target **212** using a coded laser signal (e.g., pulse coded signal) so that a munition or a projectile can be directed to the target, either directly or via a handoff to another tactical unit. In various examples, the munition may be a smart bomb, a guided missile, or some other programmable weapon, which may be delivered via an aircraft **208** or other suitable tactical unit. Returning to FIG. 1, in some example implementations, the targeting system may include a targeting laser **116** or another laser such as a night-vision compatible pointer to emit the coded laser signal to allow association of that particular target with a particular spotter. In some examples, this targeting laser may be co-aligned with the LOS of the targeting system, and perhaps thereby also the rangefinder **112.** The ability to coordinate with a tactical unit to identify the particular target to be engaged has practical advantages that will be discussed in more detail below.

In some examples, the personal display system **102** may be used by the operator (e.g., spotter **202, 204)** to identify field elements in the field of view of the live view. In addition, in some examples, the personal display system may be used to identify the coded laser signal to enable the targeting system **100** to confirm that a target in the field of view, such as a target at or proximate the center of the field of view (and possibly thereby aligned with the LOS of the targeting system), is actually being illuminated by its own rangefinder **112** or targeting laser **116** and not that of another targeting system. In some examples, the coding scheme for the coded laser signal is controlled by North America Trade Organization (NATO) Standard Agreement (STANAG) 3733, and the targeting system includes a separate component to decode and indicate direction to the laser spot.

The targeting system **100** may also include a communication interface **118** to enable wired or wireless communication between targeting systems, with the command hub **206,** and/or other tactical units such as the aircraft **208.** The communication interface enables communication with related entities, including any command hub or other tactical units, which may improve friendly forces fighting efficiency by coordinating targets among multiple targeting systems and multiple tactical field units, as well as helping to safeguard friendly troops.

The targeting system **100** may further include a user input interface **120** to enable an operator to input data and make selections of both menu items and elements observed on the display device **108.**

In some examples, either or both the communication interface **118** or user input interface **120** enables data input to the targeting system **100,** which may store the data input in its memory **114.** This capability may allow the targeting system to be pre-programmed for a particular battlefield environment **200** and expected conditions, prior to deployment in a tactical situation, to save time and reduce the need for real time communication of data that is in most cases substantially static.

The data input or other data stored in the memory **114** may include landmark data, tactical information, battlefield element data and the like, which may be used by the targeting system **100** to generate the primary and secondary views that overlay and augment the live view generated or enabled by the personal display system **102.** The landmark data may include the geographic locations of landmarks and perhaps other related data, such as identification information associated with landmarks so that particular features such as signage may be identified. The landmark data may be developed from satellite images and legacy map data, or the landmark data may include other geolocation sources, including the targeting system itself.

The landmark data is useful for orienting an operator such as a spotter **202, 204** in a tactical situation, particularly when satellite navigation positioning information, for example, GPS, is not available. In examples in which the ADU **104** includes a compass, the landmark data may also be used for calibration of the magnetic compass. For example, when the geographic location of the targeting system **100** is known, and the geographic location of a landmark is available, the targeting system can calculate the compass heading at which the landmark should appear, and if there is a discrepancy between the calculated and observed headings, an adjustment to the compass can be made. The compass can thus be calibrated for local anomalies or other calibration errors.

Tactical information may include, for example, field elements such as targets and other assets available for offensive operations as well as detailed information about particular munitions, such as a risk estimate distance. As described above, this risk estimate distance is a minimum safe distance associated with the munition, and may therefore be a measure of how far friendly forces **214, 216** should be from a target **212** to avoid unintended damage to equipment or injury to personnel when a particular munition is used. Battlefield element data may include, for example, the last known geographic location of friendly forces, the last location of previously-identified targets, or other tactical information.

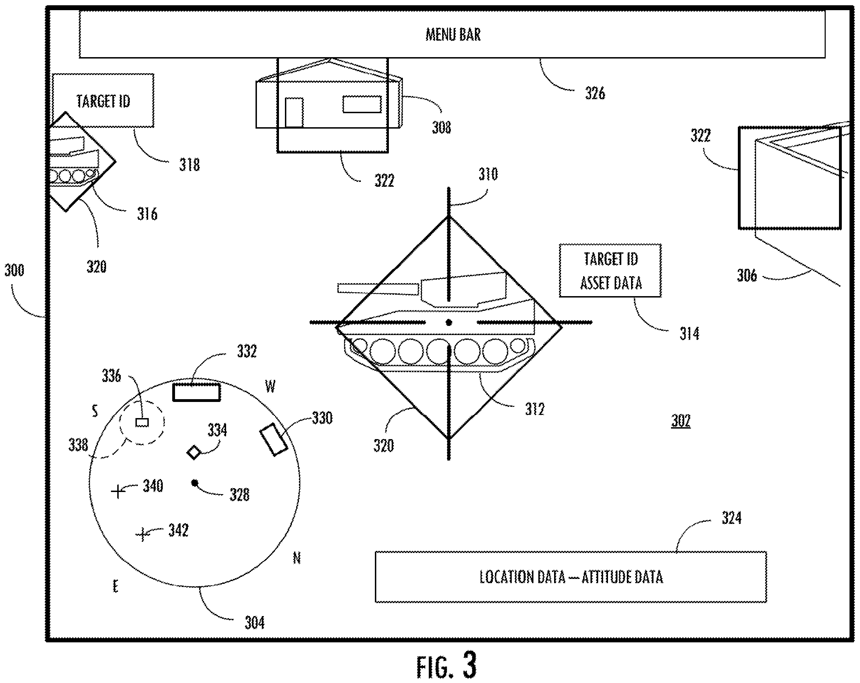

FIG. 3 depicts a screen **300** of the display device **108** of the targeting system **100** in which primary and secondary views **302, 304** may be displayed and overlay a live view of a battlefield environment (e.g., battlefield environment **200).** As indicated above, in some examples, the live view is a direct live view of the environment as may be seen through augmented reality eyeglasses, telescope or the like. In other examples, the live view is an indirect live view of the environment that may comprise images or video generated by an imaging system such as a digital camera.

As shown in FIG. 3, the live view of the environment includes first and second landmarks **306, 308** in the form of buildings. In the primary view **302**, a reticle **310** overlays a target **312** indicating that the target is currently aligned with the LOS of the targeting system. A target window 314 shows a target identifier indicating the target has been identified and, when available, asset data indicating what tactical unit (aircraft) and munition type are assigned to the target.

A second target **316** may be in the field of view of the live view. When the second target has already been identified, the primary view **302** may include an associated target window **318** to indicate both that the target is known and to indicate the relevant information for the second target. The second target may have been previously identified by the current targeting system **100,** such as one used by a first spotter **202,** or by another targeting system, such as one used by a second spotter **204** (FIG. 2).

In some examples, the primary view **302** may include a target icon **320** in the form of a diamond that overlays and thereby highlights each of the targets **310, 316**. When color is used, the target icon may be red. Similarly, the primary view may include an object icon **322** in the form of a square to overlay and thereby identify the landmarks **306, 308** or other non-threat field elements. In some examples, portions of the target icons and object icons are unfilled so that the respective field elements in the live view are visible through the icons. Other icons may also be associated with other field elements, such as friendly troops, etc. And in some examples, the tilt of the targeting system **100** may be used to place the icons overlaying the field elements, and more particularly in some examples, those field elements not centered in the field of view.

In some examples, the targeting system **100** has a shared optics system that allows the personal display system **102,** rangefinder **112** and perhaps also the targeting laser **116** to share the same aperture (external-facing optical lens). In other examples, these components do not share the same aperture, but their lines-of-sight are parallel. The personal display system presents an LOS-centered view on the display device **108,** and the targeting system is aware of its own attitude and geographic location, and the geographic locations of field elements, allowing the targeting system to maintain icons **320, 322** over respective field elements, even though the personal display system itself does no image recognition. Unlike other augmented reality in which computer vision and optical recognition are used to identify something shown on a display and present related information, the targeting system of example implementations may place the icons in the primary view **302** at calculated positions (display coordinates) based on the field of view of the live view and perhaps also a selected zoom level independent of the live view and selected zoom level without regard to the viewability of the field elements. This allows icons to accurately reflect the locations of respective field elements even if they are completely obscured by smoke or hidden by darkness.

As also shown, the primary view **302** may include a status bar **324** that indicates a status of the targeting system **100,** such as its geographic location, attitude and the like. Even further, either as part of or separate from the primary view, the screen **300** may include a menu bar **326** to show operational selections and status data such as an optical setting. These selections may include, for example, selections of visible or infrared light, frame capture, target identification options, landmark selections, and sending a transmission with current data.

Moreover, although not separately shown in FIG. 3, the primary view **302** may include an arrow indicating a previously identified field element such as a target that is outside the primary view, and a turning direction from the LOS of the targeting system **100** to the respective field element. This arrow may thereby indicate the direction the targeting system must be turned to place the field element back in the primary view.

The secondary view **304** is shown in FIG. 3 with the current targeting system **100** being shown by an icon at a center **328**. The secondary view, also known as a radar view or polar view, illustrates all identified field elements in the vicinity of the targeting system whether or not in the current field of view of the live view generated or enabled by the personal display system **102.** That is, the secondary view may be used to show identified elements that may be behind the spotter **202, 204** (FIG. 2), or as a quick indication of which way to turn to most easily bring a particular field element into view. In this example implementation, the current LOS (heading) is shown at the top of the secondary view. In a different example implementation, the secondary view is fixed in a predetermined direction, such as north. In an example implementation, this choice of view may be selectable to accommodate a particular operator or for ease of communication with a related asset, such as the second spotter. As illustrated in FIG. 3, the field elements in the current field of view of the live view include the landmarks **306, 308** as shown by icons **330, 332,** respectively and the target **312** is shown by icon **334.**

The second target **316** is indicated by icon **336,** which is surrounded with a risk estimate distance indicator **338** illustrating a risk estimate distance for the munition assigned to the target. As suggested above, the risk estimate distance is the distance beyond which friendly forces should be from the second target to avoid unintended damage to equipment or injury to personnel. The risk estimate distance indicator is shown for the second target but in various example implementations may be shown for any and all targets to which a munition or munition type has been assigned, thus allowing a risk estimate distance to be assigned. This assignment is made locally using stored data for various munitions or munition types in one example implementation, while in another example implementation the information is sent to the targeting system **100** from the command hub **206** or other data source (not shown).

Also shown in the secondary view **304** are first and second friendly force **340, 342,** which may be pre-programmed in the targeting system **100,** identified by the targeting system or another targeting system, or sent from the command hub **206** based on other geographic location information. The ability to locate friendly forces gives several advantages, from being aware of the risk estimate distance with respect to a friendly force, to being notified when a friendly force is in the reticle or even targeted in error.

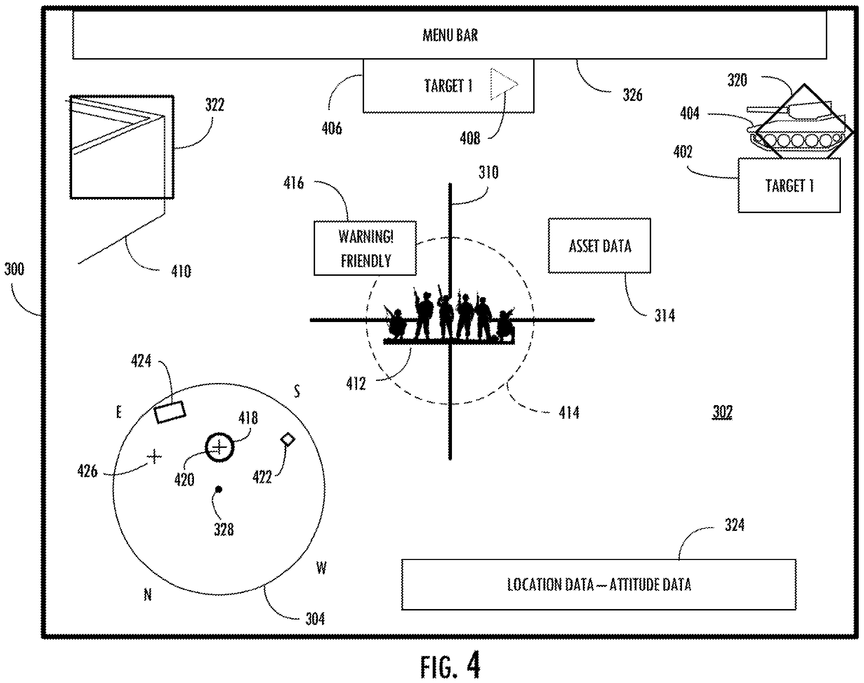

FIG. 4 is another depiction of the screen **300** of the display device **108** of the targeting system **100.** As illustrated in FIG. 4, the primary view **302** shows a target information window **402** for a target **404** in the field of view, identifying the target as "Target 1." A drop-down box **406** can be used to select a previously identified field object, in this case Target 1, and it or another box may include an arrow **408** that indicates a direction (turning direction) in which the targeting system **100** must turn to center the selected field object (Target 1) in the field of view of the live view (centered on the LOS of the targeting system).

Also shown in FIG. 4 are a landmark **410** and a group of personnel **412** in the reticle **310** aligned with the LOS of the targeting system **100** on which the field of view of the live view is centered. Also shown in the primary view **302** are notifications in the form of a warning indicator **414** and a pop-up box **416** that both separately indicate that the group has been previously classified as a friendly force. Obviously, targeting friendly forces is undesirable so the warning indicator and pop-up box serve to increase the safety of friendly forces and reduce the risk of unintended damage to equipment or injury to personnel. A similar warning icon **418** is shown in the secondary view **304** around the icon **420** for the friendly force. Also shown in the illustrated example implementation are icons **422, 424** representing respectively the target **404** and landmark **410,** as well as another friendly force icon **426.**

Referring in particular to FIGS. 1, 2 and 3, according to some example implementations in which the targeting system **100** is used by the first spotter **202** in the battlefield environment, the ADU **104** of the targeting system provides azimuth and elevation that describe the LOS of the targeting system. The rangefinder **112** or targeting laser **116** of the targeting system may use a coded signal to indicate a target **312** to another observer, in some example implementations, an aircraft **208** or another spotter **204,** or that provides the range from the targeting system to the respective target. In an example implementation, the coded signal and either or both the relative location or absolute location of the target may be supplied to the other observer. Knowledge of the targeting system's geographic location, azimuth, elevation (angle up or down from horizontal), and range to the target allows accurate computation of the geographic location (absolute location) of the target. Either or both the target's geographic location or the coded signal can be used to direct an appropriate munition to the target. The target's geographic location may be saved in memory **114** and referred to as other targets **316** are spotted, and as the geographic location, azimuth and/or elevation of the targeting system changes.

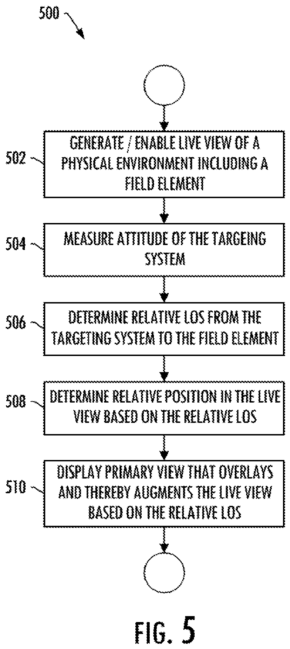

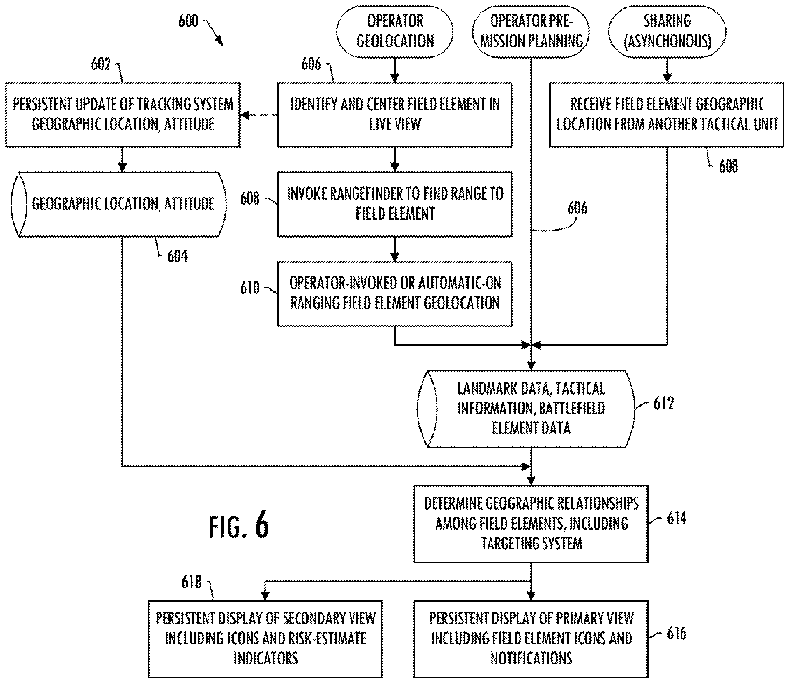

Having described the targeting system **100,** its various components and how it may be configured for particular use in a battlefield environment **200,** FIGS. 5 and 6 illustrate various operations in methods of using a targeting system generally in a physical environment and more particularly in a battlefield environment, according to example implementations of the present disclosure.

FIG. 5 illustrates a method **500** of using a targeting system in a physical environment including a field element, according to example implementations of the present disclosure. As shown at block **502,** the method includes generating or enabling a live view of the physical environment, with the live view including the field element and having a field of view centered on the LOS of the targeting system. As shown at block **504,** the method includes measuring an attitude of the targeting system in an azimuth and elevation that describe the LOS of the targeting system, and in a tilt of the targeting system. The method includes determining a relative LOS from the targeting system to the field element based on the attitude and a geographic location of the targeting system, and a geographic location of the field element, as shown at block **506.** The method includes determining a relative position in the live view from the center of the field of view to the field element therein based on the relative LOS, as shown at block **508.** And the method includes displaying a primary view that overlays and thereby augments the live view, with the primary view including an icon at the relative position that thereby overlays the field element in the live view, as shown at block **510.**

FIG. 6 illustrates a method **600** of using a targeting system **100** in a battlefield environment **200** including a field element, according to example implementations of the present disclosure. As shown at block **602,** the method includes determining and persistently updating the targeting system's attitude and geographic location (self-location). In various examples, the attitude includes both a compass direction (azimuth), an angle from horizontal in the plane of gravity and the line-of-sight (elevation), and another angle from horizontal in the plane of gravity and the direction orthogonal to the plane of gravity and the LOS (tilt). In one example, the attitude is sensed via the ADU **104,** which may include a digital compass.

In one example, the targeting system **100** self-determine its geographic location using its position sensor(s) **110** and/or rangefinder **112**. In some examples, either or both the attitude or geographic location may be independently updated at a fast rate or rates, with storage for asynchronous access (block **604**). This may facilitate asynchronous targeting processes for geolocation and display always or nearly always having very recent and correct attitude and targeting system geographic location available, and the rate may be fast enough such that the display appears continuous to the operator.

As also shown, the method **600** includes various operations according to which the targeting system **100** may obtain the geographic locations of field elements in the battlefield environment. As shown at **606,** the targeting system may be pre-programmed with landmark data for a particular battlefield environment **200;** or as shown at block **608,** the targeting system may receive landmark data from another tactical unit such as another targeting system **100,** command hub **206,** aircraft **208** or the like. In these examples, the targeting system may be pre-programmed or receive the landmark data via various means such as its communication interface **118** or user input interface **120.**

In another example according to which the targeting system **100** may obtain the geographic locations of field elements, an operator may identify a field element using the personal display system **102** and center the field element in the field of view of the live view, as shown at block **606.** This may correspond to the reticle **310** overlaying the target **312** and thereby indicating that the target is currently aligned with the LOS of the targeting system (FIG. 3). At this time, the operator may mark the field element (and in particular a target) using a coded laser signal (not separately shown in FIG. 6). The operator may also invoke the rangefinder **112** (e.g., using menu bar **326**) to determine the range from the targeting system to the field element, as shown at block **608.** The targeting system may then use the most recent attitude and geographic location of the targeting system, and the range to the field element to determine (geolocate) the geographic location of the field element, as shown at block **610.** In various examples, geolocation of the field element may be operator invoked or invoked automatically upon determination of the range to the field element.

Regardless of the particular manner according to which it is obtained, the targeting system **100** may send the geographic location of the field element to other tactical units (e.g., another targeting system **100,** command hub **206,** aircraft **208).** The targeting system may also add the geographic location of the field element to the landmark data, tactical information, battlefield element data and the like stored in memory **114** of the targeting system, as shown at block **612.** This data may be accumulated from the targeting system and other tactical units in any of a number of suitable manners, and may include data for known field elements one or more of which may be classified by the operator. Examples of suitable classifications include target, friendly, landmark or simply "undeclared" if the nature of the field element is not assigned by the operator.

As shown at block **614,** the method includes determining relationships among field elements in the battlefield environment **200,** and including the targeting system **100.** These relationships may include geometric relationships determined based on the attitude and geographic location of the targeting system, and geographic locations of the field elements. In FIG. 3, this may include relationships among landmarks **306, 308,** targets **312, 316,** any friendly forces and any unclassified field elements, and the targeting system.

Determining the geometric relationships may also include the targeting system **100** determining a relative LOS and distance from the targeting system to each field element in the field of view. This relative LOS may be used to determine the relative position from the center of the field of view to the field element in the live view for placement of the appropriate icon that overlays the field element in the primary view, and any notifications (e.g., warnings) regarding the field element in the primary view, as shown in block **616.** The relative LOS and distance may be used for placement of appropriate icons representing the field elements in the secondary view, as shown in block **618.** And as explained above, the secondary view may also include any appropriate risk estimate distance indicators for targets that indicates the minimum safe distance associated with a munition assigned to the target.

The targeting system **100** of various example implementations is location and/or attitude aware. Even if the targeting system is moved to a new location, rotated, or elevated, the geographic location of the field element is still known, so that the targeting system will continue to know the location of the field element with respect to the new location and attitude of the targeting system.

As described above, the targeting system **100** and methods according to example implementations of the present disclosure may use geographic location (absolute location) to determine geographical (spatial) relationships between one or more targeting systems and a variety of field elements. In some examples, the development of these geographical relationships uses an earth-centered approach to reckoning the relationships among the targeting system itself and hundreds or more of field elements. The following describes an example implementation for providing geographic location of objects that is suitable for use in example implementations of the targeting system and methods described above.

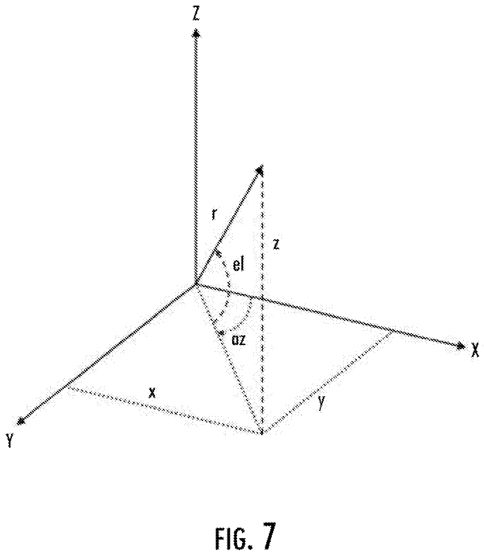

FIG. 7 is a diagram depicting a frame of reference (i.e., a Cartesian coordinate system) in which an azimuth angle (labeled "az") and an elevation angle (labeled "el") are defined. FIG. 7 also shows the relationship of azimuth and elevation to the X, Y and Z axes. Azimuth is defined as positive in the direction from +X towards +Y. Elevation is defined as positive in the direction from the X-Y plane towards +Z. The relationships between the various angles and distances for a field element located at a distance r from the origin of the Cartesian coordinate system with an azimuth angle "az" and an elevation angle "el" are (written in computer language in which "atan2" means "full-circle arctangent") as follows:

$$az = atan2(y, x)$$

$$el = atan2(z, (x^2 + y^2)^{1/2})$$

$$r = (x^2 + y^2 + z^2)^{1/2}$$

$$r\cos(el) = (x^2 + y^2)^{1/2}$$

$$x = r\cos(el)\cos(az)$$

$$y = r\cos(el)\sin(az)$$

$$z = r\sin(el)$$

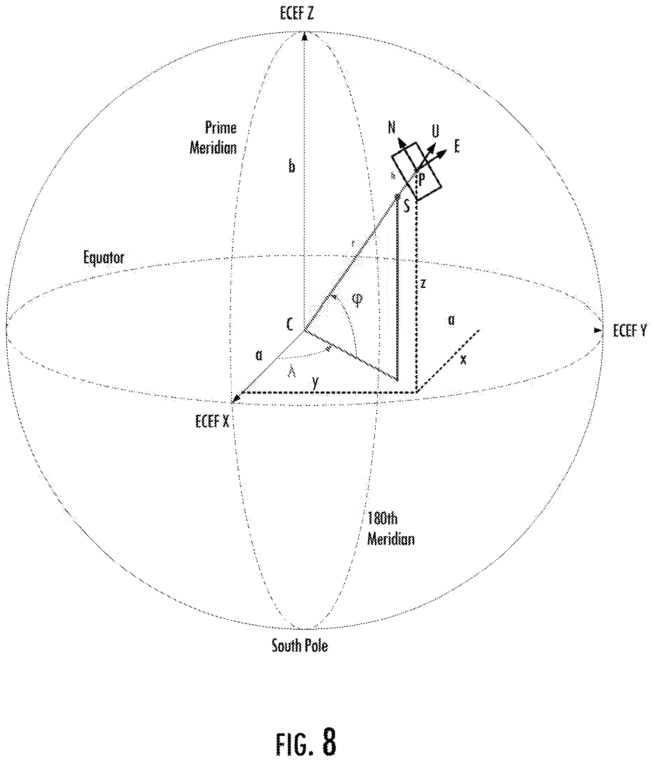

The Earth-centered, Earth-fixed (ECEF) frame of reference is referred to extensively in the following detailed description. The origin of the ECEF frame of reference is the center of the Earth, with X passing through the intersection of the Equatorial and Prime Meridian Great Circles, and Z pointing through the North Pole. The ECEF frame of reference is right-handed. FIG. 8 is a diagram depicting the ECEF frame of reference with defining parameters for the reference system used by the GPS and a graphic representing the Earth Model. Latitude and longitude are the names of elevation and azimuth, respectively, in the ECEF frame of reference.

More specifically, FIG. 8 provides a graphic and defining parameters for the World Geodetic System (hereinafter "WGS84"), which is the frame of reference currently used by the GPS. The WGS84 frame of reference defines an ellipse with its minor axis in ECEF Z and its major axis in the plane of ECEF Y and ECEF X. The ellipse is rotated about ECEF Z to form a surface of revolution. The surface of revolution is the Earth Model. The height h of point P in FIG. 8 is defined as its distance from the Earth Model along a ray extending from the ECEF origin through point P. Since the Earth Model is defined by an ellipse with unequal axis lengths, height h is latitude dependent. The local geodetic frame of reference, including North (N), East (E) and Up (U), is also shown in FIG. 8.

The WGS84 standard defines a reference ellipsoid for Earth as follows:

ellipsoid semi-major axis length a = 6378137.0 m
ellipsoid flattening f is defined by 1/f = 298.257223563
ellipsoid semi-minor axis length b = a(1 - f)

Other terms which appear in FIG. 8 are defined as follows:

P - point of interest
C - ECEF origin (center of Earth)
ECEF X, Y, Z - ECEF directions
x, y, z - ECEF coordinates of P
S - point on ellipsoid directly "below" P
h - height of P above S (also called altitude)
λ - longitude (generically, azimuth)
φ - latitude (generically, elevation)
r - distance from C to S (since a ≠ b, r is latitude dependent)
E, N, U - the local geodetic directions East, North, Up from P

The coordinates P(x,y,z) of point P may be found from φ, λ and h by first finding r according to the following equation:

$$r = a/(1 - (1 - b^2/a^2)\sin^2\varphi)^{1/2}$$

Then

$$x = (h + r) \cos(\varphi) \cos(\lambda)$$

$$y = (h + r) \cos(\varphi) \sin(\lambda)$$

$$z = (h + rb^2/a^2) \sin(\varphi)$$

The relationship between the local geodetic coordinate system (ENU) and an ECEF-parallel coordinate system with the same origin is given by the following transformation matrix from local geodetic (G) to ECEF-parallel (E):

$$CGE = \begin{bmatrix} -\sin(\lambda) & \cos(\lambda) & 0 \\ -\cos(\lambda)\sin(\varphi) & -\sin(\lambda)\sin(\varphi) & \cos(\varphi) \\ \cos(\lambda)\cos(\varphi) & \sin(\lambda)\cos(\varphi) & \sin(\varphi) \end{bmatrix}$$

An additional frame of reference requiring definition is the LOS frame of reference. In one example, LOS X corresponds to the center of the field of view of the live view generated / enabled by the personal display system **102,** centered on the LOS of the targeting system **100,** with which the rangefinder **112** may be co-aligned. LOS Z is "up" as seen on the personal display system. LOS Y is "right" as seen on the personal display system.

In addition, the ADU **104** has a frame of reference referred to herein as "Body," which may be misaligned with the LOS frame of reference. Mounting compensations in roll, pitch, and yaw are used to correct for these differences.

Finally, the term "magnetic declination" is used herein. If a compass is used for determining heading to a point or object, the difference between the direction to the Magnetic Pole and true North is important. Magnetic declination is the angle between true North and magnetic North, and is positive when magnetic North is east of true North. This can be expressed by the following equation: True Bearing = Magnetic Bearing + Magnetic Declination.

Geolocation

To establish the geographic location of a remote object such as a field element, the operator of the targeting system **100** directs personal display system toward the field element and centers the field element in the live view. The operator then uses a co-aligned rangefinder **112** to find the field element's range, i.e., the distance from the targeting system to the field element. The processing circuitry **106** of the targeting system is configured to use the system's attitude and geographic location, and the range from the system to the field element, to determine the field element's geographic location.

The geolocation inputs to the processing circuitry **106** may include the following information:

Range - range to field element (measured by the rangefinder **112**)
$R_C$ - roll compensation to ADU frame of reference (a measured value)
$P_C$ - pitch compensation to ADU frame of reference (a measured value)
$Y_C$ - yaw compensation to ADU frame of reference (a measured value)
$R_A$ - roll attitude (measured by the ADU **104** - e.g., digital compass)
$P_A$ - pitch attitude (measured by the ADU - e.g., digital compass)
$Y_A$ - yaw attitude (heading relative to magnetic North measured by the ADU - e.g., digital compass)
$Y_D$ - magnetic declination
LAT - geodetic latitude (WGS84) of the targeting system **100** (determined using GPS signals or landmark-based self-location)
LON - geodetic longitude (WGS84) of the targeting system (determined using GPS signals or landmark-based self-location)
H - geodetic height (WGS84) of the targeting system (determined using GPS signals or landmark-based self-location).

Notationally, a 3x3 single-axis transformation matrix is denoted as <angle>, where <angle> will be one of the angles given above. There are three forms used for the single-axis 3x3 matrix. The particular form is determined by the axis that the transformation matrix is transforming about. The three forms for pitch, yaw and roll are as follows:

$$\text{Pitch:} \quad \begin{bmatrix} \cos<angle> & 0 & -\sin<angle> \\ 0 & 1 & 0 \\ \sin<angle> & 0 & \cos<angle> \end{bmatrix}$$

$$\text{Yaw:} \quad \begin{bmatrix} \cos<angle> & \sin<angle> & 0 \\ -\sin<angle> & \cos<angle> & 0 \\ 0 & 0 & 1 \end{bmatrix}$$

$$\text{Roll:} \quad \begin{bmatrix} 1 & 0 & 0 \\ 0 & \cos<angle> & \sin<angle> \\ 0 & -\sin<angle> & \cos<angle> \end{bmatrix}$$

It is usually obvious by the name of the angle which form is used.

When one or more single-axis 3x3 transformation matrices have been multiplied, the resulting matrix is conventionally called a direction cosine matrix and denoted by Cxy, where x and y denote respective frames of reference (L - line-of-sight; B - body; G - geodetic; E - ECEF-parallel). The name may be interpreted as the matrix that transforms from the x frame of reference to the y frame of reference. For example, CLB is a direction cosine matrix that transforms from the line-of-sight frame of reference to the body frame of reference, and CBG is a direction cosine matrix that transforms from the body frame of reference to the geodetic frame of reference.

In some examples, the geolocation algorithm includes operations performed by the processing circuitry **106** of the targeting system **100** based on one or more computer programs stored in memory **114,** as explained in greater detail below. These computer program(s) (written in computer language) include the generation of the following transformation matrices:

// LOS to Body (correct for sensor-to-compass misalignment)

$$CLB = [Y_C]\,[P_C]\,[R_C]$$

// Body to Geodetic

$$CBG = [Y_A + Y_D]\,[P_A]\,[R_A]$$

// Geodetic to ECEF-parallel
// [LAT] uses the pitch matrix form, [LON] uses the roll matrix form

$$CGE = \begin{bmatrix} 0 & 0 & 1 \\ 0 & -1 & 0 \\ 1 & 0 & 0 \end{bmatrix}[-LON][-LAT]$$

// ECEF-parallel to Geodetic

$$CEG = \text{transpose}(CGE)$$

// LOS to ECEF-parallel

$$CLE = CGE\ CBG\ CLB$$

13

// ECEF-parallel to LOS

$$CEL = transpose(CLE)$$

After the transformation matrices have been generated, the processing circuitry **106** calculates the ECEF position (the geographic location) of the targeting system **106** using a = 6378137.0 and f = 1/298.257223563. (In computer language, the "=" sign does not mean "equal to" but rather means "is assigned" (e.g., retrieve from memory **114**) that value and set the parameter to the retrieved value.) In particular, the processing circuitry calculates b = a(1 - f), and N = a/(1 - (1 - $b^2/a^2$)$\sin^2$(lat))$^{1/2}$. Then the processing circuitry calculates the system's ECEF coordinates as follows:

$$ECEFx = (h + N) \cos(lat) \cos(lon)$$

$$ECEFy = (h + N) \cos(lat) \sin(lon)$$

$$ECEFz = (h + Nb^2/a^2) \sin(lat)$$

After the ECEF position (geographic location) of the targeting system **100** has been calculated, the processing circuitry **106** then calculates the position (geographic location) of a field element in ECEF coordinates as follows:

$$\begin{bmatrix} ECEFxo \\ ECEFyo \\ ECEFzo \end{bmatrix} = CLE \begin{bmatrix} Range \\ 0 \\ 0 \end{bmatrix} + \begin{bmatrix} ECEFx \\ ECEFy \\ ECEFz \end{bmatrix}$$

After the position of the field element in the ECEF frame of reference has been calculated, the processing circuitry **106** converts that ECEF position into the corresponding lat, lon, h coordinates of the position of the field element in the WGS84 frame of reference using the following algorithm.

To determine the longitude of the field element, consider that y/x may be expressed (using the equations given above) as:

$$y/x = ((h + N) \cos(lat) \sin(lon))/((h + N) \cos(lat) \cos(lon)),$$

From this, the processing circuitry **106** may obtain y/x = sin(lon)/cos(lon) and y/x = tan(lon), or lon = atan2(y,x) ("atan2" is used because a full circle arctangent is needed). Finding latitude and height is independent of longitude, and so can be worked in the plane of the Meridian containing the field element.

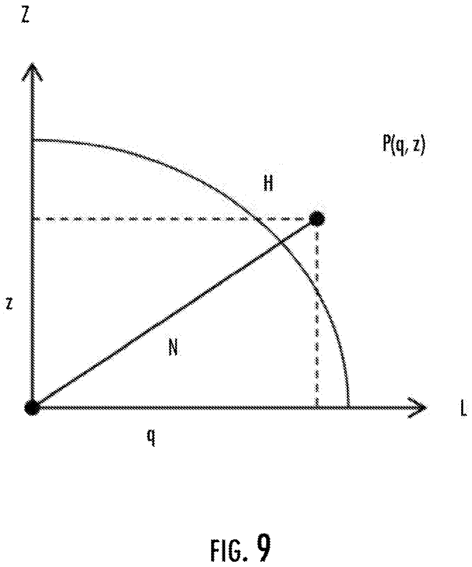

FIG. 9 is a diagram representing a plane formed from the ECEF Z axis and a point representing a location of a field element. The cross-Z component is shown in FIG. 9 as "q," the root of the sum of the squares of x and y, i.e., q = ($x^2$ + $y^2$)$^{1/2}$. Since $q^2$ = ($x^2$ + $y^2$), one may substitute for x and y to give:

$$q^2 = ((h + N) \cos(lat) \cos(lon))^2 + ((h + N) \cos(lat) \sin(lon))^2$$

or

$$q^2 = (h + N)^2 \cos^2(lat) \cos^2(lon) + (h + N)^2 \cos^2(lat) \sin^2(lon)$$

Factoring gives the following equation:

$$q^2 = (h + N)^2 \cos^2(lat) (\cos^2(lon) + \sin^2(lon))$$

Next, apply the trigonometric identity $\cos^2(\theta) + \sin^2(\theta) = 1$ to obtain the following equation:

$$q^2 = (h + N)^2 \cos^2(lat),$$

which leads to:

$$q = (h + N) \cos(lat)$$

or

$$h = q/\cos(lat) - N.$$

Working with the expression for ECEF z:

$$z = (h + Nb^2/a^2) \sin(lat)$$

$$h = z/\sin(lat) - Nb^2/a^2$$

Equating these expressions for h (that is, $h = q/\cos(lat) - N = z/\sin(lat) - Nb^2/a^2$) and solving for z gives the following sequence:

$$z/\sin(lat) - Nb^2/a^2 = q/\cos(lat) - N$$

$$z/\sin(lat) = q/\cos(lat) - N + Nb^2/a^2$$

$$z/\sin(lat) = q/\cos(lat) - N(1 - b^2/a^2)$$

$$z/\sin(lat) = q/\cos(lat) - e^2 N$$

$$z = \sin(lat)(q/\cos(lat) - e^2 N)$$

This last expression for z is not algebraically solvable for lat, but it does provide a basis for an iterative function to determine a latitude estimate giving a z sufficiently close to the supplied ECEF z. As q is a function of ECEF x and ECEF y, and N is a function of the latitude estimate, for a given scenario, q may be found once but N may be recalculated with each new latitude estimate.

For an estimate of the latitude of the field element called lat_est, the error function is then:

$$z\_error = \sin(lat\_est)(q/\cos(lat\_est) - e^2(a/(1 - e^2 \sin^2(lat\_est))^{1/2})) - z$$

One of several conventional root-finding algorithms may be employed to find a lat est producing a z error of sufficiently small magnitude. One suitable root-finding algorithm is the Secant Method, which is fast and does not rely on initial bracketing of the root.

With lat for the field element determined, the equation $h = r/\cos(lat) - N$ can be employed to determine h for the field element.

Field Elements In-View

In some examples, the combined landmark data and battlefield element data represent a list of known objects (field elements), including for each field element, at least a geographic location in ECEF coordinates (ECEFxo, ECEFyo, ECEFzo) and classification. For each of the known objects in the field of view of the live view generated or enabled by the personal display system **102,** the processing circuitry **106** may determine a relative position in the live view, and cause the personal display system display a primary view (e.g., primary view 302) with an appropriate icon at that relative position that overlays the field element in the live view. Similarly, the processing circuitry may determine a position for an icon that represents the known objects surrounding the targeting system **100** in the secondary view (e.g., secondary view 304). These positions may be determined and reflected in any of a number of different manners. One suitable manner is described below in which the positions are reflected in display coordinates.
To assign display coordinates in the secondary view and possibly the primary view, the processing circuitry **106** may determine a relative LOS (in azimuth and elevation) and distance from the targeting system **100** to each known object. With this information, and an arbitrary assignment of pixel scaling, the processing circuitry may assign display coordinates for each known object in the secondary view. Also with this information, and an understanding of the field of view of the selected live view, each known object's relative LOS can be evaluated as a candidate for drawing in the primary view, and those objects within the limits of the primary view may be assigned display coordinates in it. In some examples, the processes of assigning display coordinates in the primary and secondary views, and the drawing of representative graphical symbols (icons) on those views, are performed at a sufficiently high frequency to appear to the operator as being smooth tracking of the icons while the targeting system **100** is being turned or moved.
The calculation of the relative line of sight of each object for the primary view 186, expressed as angle and in pixels relative to the display center, may begin by finding the ECEF-parallel coordinates of the object 'n' relative to the targeting system coordinates 'T':

$$\begin{bmatrix} ECEF\,xp \\ ECEF\,yp \\ ECEF\,zp \end{bmatrix} = \begin{bmatrix} ECEFxn \\ ECEFyn \\ ECEFzn \end{bmatrix} - \begin{bmatrix} ECEFx\,T \\ ECEFy\,T \\ ECEFz\,T \end{bmatrix}$$

The LOS coordinates of the object, here called an object of interest (OOI), may then be found using the CEL direction cosine matrix discussed above.

$$\begin{bmatrix} OOIxL \\ OOIyL \\ OOIzL \end{bmatrix} = CEL \begin{bmatrix} ECEF\,xp \\ ECEF\,yp \\ ECEF\,zp \end{bmatrix}$$

Next, the LOS azimuth and elevation to OOI 'n' may be found as respectively OOIazn and OOTeln, and scaled to pixels from the center of the field of view of the live view, as follows:

$$OOIazn = atan2(OOIyL, OOIxL)$$

$$OOIeln = atan2(OOIzL,(OOIxL*OOIxL + OOIyL*OOIyL)^{1/2})$$

$$OOIazn\_pixels = OOIazn * one\_over\_primary\_view\_pixel\_size[zoom]$$

$$OOIeln\_pixels = OOIeln * one\_over\_primary\_view\_pixel\_size[zoom]$$

Function atan2 is a full-circle arctangent function. Function one_over_primary_view_pixel_size[] provides a lookup of pixel scaling for the chosen magnification level (here called 'zoom') of the primary view. This function may be implemented in any of a number of different manners with the understanding that an image (or display) pixel subtends an arc in screen-horizontal and an arc in screen vertical, with the assumption these are the same (i.e., square pixels), and that the function converts real angle components to numbers of pixels at the chosen magnification level.

For the distance from the targeting system **100** to a known object, the processing circuitry **106** may employ an algorithm to determine the point-to-point distance between any two objects. One example of a suitable algorithm includes, for points n and m, finding relative coordinates of targeting system T to object 'n':

$$\begin{bmatrix} \text{ECEF } xp \\ \text{ECEF } yp \\ \text{ECEF } zp \end{bmatrix} = \begin{bmatrix} ECEFxT \\ ECEFyT \\ ECEFzT \end{bmatrix} - \begin{bmatrix} \text{ECEF } xn \\ \text{ECEF } yn \\ \text{ECEF } zn \end{bmatrix}$$

The distance Dn from the targeting system T to object 'n' may then be determined as follows:

$$Dn = (ECEFxp*ECEFxp + ECEFyp*ECEFyp + ECEFzp*ECEFzp)^{1/2}$$

In some examples, the secondary view (e.g., secondary view **304**) may be drawn as a polar view relative to the LOS of the targeting system **100,** which may be drawn as display-vertical. In these examples, display coordinates relative to the center of the secondary view (e.g., center **328**) may be determined for each object as follows.

For object 'n', angles OOIazn and OOIeln, and distance Dn, may be used as calculated above. The value one_over_secondary_view_pixel_size is an implementation-dependent assignment of pixels per unit of distance. This assignment may be implemented in any of a number of different manners with the understanding that in the radar view, range in meters may be converted to a number of display pixels, and that the angles may be used to determine pixel x and pixel y components for plotting. The display horizontal dimension is labeled X, and the display vertical dimension is labeled Y.

$$SecondaryViewPixelsXN = Dn * one\_over\_secondary\_view\_pixel\_size * \sin(OOIazn)$$

$$SecondaryViewPixelsYN = Dn * one\_over\_secondary\_view\_pixel\_size * \cos(OOIazn)$$

According to example implementations of the present disclosure, the targeting system 100 and its subsystems and other components may be generally implemented by various means. Means for implementing the system and its subsystems may include hardware, alone or under direction of one or more computer programs from a computer-readable storage medium. As described above, in some examples, the targeting system includes processing circuitry **106** (e.g., processor unit) connected to a memory **114** (e.g., storage device).

The processing circuitry **106** may be composed of one or more processors alone or in combination with one or more memories. The processing circuitry is generally any piece of computer hardware that is capable of processing information such as, for example, data, computer programs and/or other suitable electronic information. The processing circuitry is composed of a collection of electronic circuits some of which may be packaged as an integrated circuit or multiple interconnected integrated circuits (an integrated circuit at times more commonly referred to as a "chip"). The processing circuitry may be configured to execute computer programs, which may be stored onboard the processing circuitry or otherwise stored in the memory **114** (of the same or another targeting system **100).**

The processing circuitry **106** may be a number of processors, a multi-core processor or some other type of processor, depending on the particular implementation. Further, the processing circuitry may be implemented using a number of heterogeneous processor systems in which a main processor is present with one or more secondary processors on a single chip. As another illustrative example, the processing circuitry may be a symmetric multi-processor system containing multiple processors of the same type. In yet another example, the processing circuitry may be embodied as or otherwise include one or more ASICs, FPGAs or the like. Thus, although the processing circuitry may be capable of executing a computer program to perform one or more functions, the processing circuitry of various examples may be capable of performing one or more functions without the aid of a computer program. In either instance, the processing circuitry may be appropriately programmed to perform functions or operations according to example implementations of the present disclosure.

The memory **114** is generally any piece of computer hardware that is capable of storing information such as, for example, data, computer programs (e.g., computer-readable program code) and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory **114,** the processing circuitry **106** may also be connected to one or more interfaces for displaying, transmitting and/or receiving information. The interfaces may include a communications interface **118** (e.g., communications unit) and/or one or more user interfaces. The communications interface may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like.

The user interfaces may include the display device **108** and/or one or more user input interfaces **120** (e.g., input/output unit). The display may be configured to present or otherwise display information to a user, suitable examples of which are more fully described above. The user input interfaces may be wired or wireless, and may be configured to receive information from an operator into the targeting system **100,** such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

As suggested above, program code instructions may be stored in memory, and executed by processing circuitry that is thereby programmed, to implement functions of the targeting system **100** and its subsystems and other components described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, processing circuitry or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing circuitry or other programmable apparatus to configure the computer, processing circuitry or other programmable apparatus to execute operations to be performed on or by the computer, processing circuitry or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by processing circuitry, or storage of instructions in a computer-readable storage medium, supports combinations of operations for performing the specified functions. In this manner, the targeting system **100** may be a particular configuration of an apparatus including processing circuitry and a computer-readable storage medium or memory coupled to the processing circuitry, where the processing circuitry is configured to execute computer-readable program code stored in the memory. It will also be understood that one or more functions, and combinations of functions, may be implemented by special purpose hardware-based computer systems and/or processing circuitry which perform the specified functions, or combinations of special purpose hardware and program code instructions. As described herein, again, example implementations of the present disclosure are generally directed to a targeting system and, in particular, to a targeting system with dynamic, persistent tracking of multiple field elements in an environment of the targeting system. The ability to dynamically indicate and retain target location information for multiple targets, as well as upload and download information about location, landmarks, and friendly forces, among other potential battlefield elements, adds a capability to the targeting system that both enhances tactical strategies and also helps safeguard friendly forces from friendly fire. The additional sensors, combined with enhanced display capabilities, provide the disclosed system with capabilities not found in current targeting devices to the benefit of both the operator of the targeting system, other assets using the target information, and friendly forces in the battlefield environment.

**Claims**

1. A targeting system (100) for use in a physical environment including a field element, the targeting system comprising:

   a personal display system (102) configured to generate or enable a live view of the physical environment, the live view including the field element and having a field of view centered on a line of sight (LOS) of the targeting system;
   an attitude determination unit (104) configured to measure an attitude of the targeting system in an azimuth and elevation that describe the LOS of the targeting system, and in a tilt of the targeting system; and
   processing circuitry (106) configured to receive the attitude from the attitude determination unit, and programmed to at least:

   determine a relative LOS from the targeting system to the field element based on the attitude and a geographic location of the targeting system, and a geographic location of the field element;
   determine a relative position in the live view from the center of the field of view to the field element therein based on the relative LOS; and
   cause the personal display system to display a primary view that overlays and thereby augments the live view, the primary view including an icon at the relative position that thereby overlays the field element in the live view,
   wherein the targeting system (100) further comprises a rangefinder (112) configured to measure a range from the targeting system to a landmark in the physical environment, and
   wherein the processing circuitry (106) is further programmed to determine the geographic location of the targeting system based on the attitude of the targeting system, the range from the targeting system to the landmark, and a geographic location of the landmark.

2. The targeting system (100) of Claim 1, wherein the attitude determination unit (104) is configured to persistently measure the attitude, and the processing circuitry (106) is configured to persistently receive the attitude, and programmed to persistently determine the relative LOS based on the attitude, determine the relative position in the live view based on the relative LOS, and cause the personal display system (102) to display the primary view including the icon at the relative position.

3. The targeting system (100) of any preceding claim further comprising a memory (114) storing a classification of the field element, the classification being of a plurality of classifications associated with a respective plurality of icons, wherein the processing circuitry (106) is further configured to access the memory, and programmed to cause the personal display system (102) to display the primary view including the icon associated with the classification of the field element.

4. The targeting system (100) of Claim 3, wherein the processing circuitry (106) is programmed to cause the personal display system (102) to display the primary view further including a notification regarding the field element in an instance in which the relative position and the center of the field of view are co-aligned, the notification being selected from a plurality of notifications based on the classification of the field element.

5. The targeting system (100) of Claim 3, wherein the field element is one of a plurality of field elements in the physical environment, and the memory (114) stores a classification of each of the plurality of field elements,

   wherein the processing circuitry (106) is programmed to determine the relative LOS from the targeting system to each of the plurality of field elements, and
   wherein the processing circuitry (106) is further programmed to identify the field element as having a relative position within the field of view based on the relative LOS from the targeting system to the field element.

6. The targeting system (100) of Claim 5, wherein the processing circuitry (106) is further programmed to identify another field element as having a relative position outside the field of view based on the relative LOS from the targeting system to the other field element, and
   wherein the processing circuitry (106) is programmed to cause the personal display system (102) to display the primary view that further includes an arrow indicating a turning direction from the LOS of the targeting system to the other field element.

7. The targeting system (100) of any preceding claim, wherein the processing circuitry (106) is further programmed to cause the personal display system (102) to display a secondary view that also overlays and thereby further augments the live view, the secondary view depicting an area of the environment surrounding the targeting system, and including icons that represent the targeting system and field element.

8. The targeting system (100) of Claim 7 further comprising a memory (114) storing a classification that identifies the field element as a target, and information that indicates a munition assigned to the target, and a minimum safe distance associated with the munition, and
wherein the processing circuitry (106) is further configured to access the memory, and programmed to cause the personal display system (102) to display the secondary view including an indicator that indicates the minimum safe distance relative to the target.

9. The targeting system (100) of Claim 7, wherein the secondary view is centered on the icon that represents the targeting system,

wherein the processing circuitry (106) is further programmed to determine a distance from the targeting system to the field element based on the geographic location of the targeting system and the geographic location of the field element, and
wherein the processing circuitry (106) is programmed to cause the personal display system (102) to display the secondary view centered on the icon that represents the targeting system, and in which the icon that represents the field element is positioned relative to the center of the secondary view based on the distance from the targeting system to the field element, and the relative LOS from the targeting system to the field element.

10. A method (500) of using a targeting system (100) in a physical environment including a field element, the method comprising:

generating or enabling (502) a live view of the physical environment, the live view including the field element and having a field of view centered on a line of sight (LOS) of the targeting system;
measuring (504) an attitude of the targeting system in an azimuth and elevation that describe the LOS of the targeting system, and in a tilt of the targeting system;
determining (506) a relative LOS from the targeting system to the field element based on the attitude and a geographic location of the targeting system, and a geographic location of the field element;
determining (508) a relative position in the live view from the center of the field of view to the field element therein based on the relative LOS; and
displaying (510) a primary view that overlays and thereby augments the live view, the primary view including an icon at the relative position that thereby overlays the field element in the live view,
wherein the method further comprises:

measuring a range from the targeting system to a landmark in the physical environment; and
determining the geographic location of the targeting system based on the attitude of the targeting system, the range from the targeting system to the landmark, and a geographic location of the landmark.

11. The method of Claim 10, wherein the field element has a classification of a plurality of classifications associated with a respective plurality of icons, and
wherein displaying (510) the primary view includes displaying the primary view including an icon associated with the classification of the field element.

12. The method of Claim 11, wherein displaying (510) the primary view includes displaying the primary view further including a notification regarding the field element in an instance in which the relative position and the center of the field of view are co-aligned, the notification being selected from a plurality of notifications based on the classification of the field element.

13. The method of Claim 11, wherein the field element is one of a plurality of field elements in the physical environment, and each of the plurality of field elements have a classification,
wherein determining (506) the relative LOS includes determining the relative LOS from the targeting system (100) to each of the plurality of field elements, and wherein the method further comprises identifying the field element as having a relative position within the field of view based on the relative LOS from the targeting system to the field element.

**14.** The method of Claim 13 further comprising identifying another field element as having a relative position outside the field of view based on the relative LOS from the targeting system (100) to the other field element, and wherein displaying (510) the primary view includes displaying the primary view that further includes an arrow indicating a turning direction from the LOS of the targeting system to the other field element.

**Patentansprüche**

**1.** Zielsystem (100) zur Verwendung in einer physischen Umgebung, die ein Feldelement enthält, wobei das Zielsystem aufweist:

ein persönliches Displaysystem (102), das dafür konfiguriert ist, eine Live-Ansicht der physischen Umgebung zu erzeugen oder zu ermöglichen, wobei die Live-Ansicht das Feldelement enthält und ein Sichtfeld aufweist, das auf einer Sichtlinie (LOS) des Zielsystems zentriert ist;
eine Lagebestimmungseinheit (104), die dafür konfiguriert ist, eine Lage des Zielsystems bezüglich eines Azimuts und einer Elevation, die die LOS des Zielsystems beschreiben, und einer Neigung des Zielsystems zu messen; und
eine Verarbeitungsschaltung (106), die dafür konfiguriert ist, die Lage von der Lagebestimmungseinheit zu empfangen, und dafür programmiert ist, mindestens:

eine relative LOS vom Zielsystem zum Feldelement basierend auf der Lage und einem geographischen Ort des Zielsystems und einem geographischen Ort des Feldelements zu bestimmen;
eine relative Position in der Live-Ansicht von der Mitte des Sichtfelds zum darin enthaltenen Feldelement basierend auf der relativen LOS zu bestimmen; und
zu veranlassen, dass das persönliche Displaysystem eine Primäransicht anzeigt, die die Live-Ansicht überlagert und dadurch erweitert, wobei die Primäransicht ein Symbol an der relativen Position enthält, das dadurch das Feldelement in der Live-Ansicht überlagert,
wobei das Zielsystem (100) ferner einen Entfernungsmesser (112) aufweist, der dafür konfiguriert ist, eine Entfernung vom Zielsystem zu einem Orientierungspunkt in der physischen Umgebung zu messen, und
wobei die Verarbeitungsschaltung (106) ferner dafür programmiert ist, den geografischen Ort des Zielsystems basierend auf der Lage des Zielsystems, der Entfernung zwischen dem Zielsystem und dem Orientierungspunkt und einem geografischen Ort des Orientierungspunkts zu bestimmen.

**2.** Zielsystem (100) nach Anspruch 1, wobei die Lagebestimmungseinheit (104) dafür konfiguriert ist, die Lage durchgehend zu messen, und die Verarbeitungsschaltung (106) dafür konfiguriert ist, die Lage durchgehend zu empfangen, und dafür programmiert ist, die relative LOS basierend auf der Lage durchgehend zu bestimmen, die relative Position in der Live-Ansicht basierend auf der relativen LOS zu bestimmen und zu veranlassen, dass das persönliche Displaysystem (102) die Primäransicht anzeigt, die das Symbol an der relativen Position enthält.

**3.** Zielsystem (100) nach einem der vorangehenden Ansprüche, ferner mit einem Speicher (114), der eine Klassifizierung des Feldelements speichert, wobei die Klassifizierung eine aus einer Vielzahl von Klassifizierungen ist, denen eine entsprechende Vielzahl von Symbolen zugeordnet sind,
wobei die Verarbeitungsschaltung (106) ferner dafür konfiguriert ist, auf den Speicher zuzugreifen, und dafür programmiert ist, zu veranlassen, dass das persönliche Displaysystem (102) die Primäransicht anzeigt, die das Symbol enthält, das der Klassifizierung des Feldelements zugeordnet ist.

**4.** Zielsystem (100) nach Anspruch 3, wobei die Verarbeitungsschaltung (106) dafür programmiert ist, zu veranlassen, dass das persönliche Displaysystem (102) die Primäransicht anzeigt, die ferner eine Meldung bezüglich des Feldelements in einem Fall enthält, in dem die relative Position und die Mitte des Sichtfelds miteinander ausgerichtet sind, wobei die Meldung aus einer Vielzahl von Meldungen basierend auf der Klassifizierung des Feldelements ausgewählt wird.

**5.** Zielsystem (100) nach Anspruch 3, wobei das Feldelement eines von mehreren Feldelementen in der physischen Umgebung ist und der Speicher (114) eine Klassifizierung jedes der mehreren Feldelemente speichert,

wobei die Verarbeitungsschaltung (106) dafür programmiert ist, die relative LOS vom Zielsystem zu jedem der mehreren Feldelemente zu bestimmen, und
wobei die Verarbeitungsschaltung (106) ferner dafür programmiert ist, das Feldelement als ein Feldelement mit einer relativen Position innerhalb des Sichtfelds basierend auf der relativen LOS vom Zielsystem zum Feldelement zu identifizieren.

**6.** Zielsystem (100) nach Anspruch 5, wobei die Verarbeitungsschaltung (106) ferner dafür programmiert ist, ein anderes Feldelement als ein Feldelement mit einer relativen Position außerhalb des Sichtfelds basierend auf der relativen LOS vom Zielsystem zum anderen Feldelement zu identifizieren, und
wobei die Verarbeitungsschaltung (106) dafür programmiert ist, zu veranlassen, dass das persönliche Displaysystem (102) die Primäransicht anzeigt, die ferner einen Pfeil enthält, der eine Drehrichtung von der LOS des Zielsystems zum anderen Feldelement anzeigt.

**7.** Zielsystem (100) nach einem der vorangehenden Ansprüche, wobei die Verarbeitungsschaltung (106) ferner dafür programmiert ist, zu veranlassen, dass das persönliche Displaysystem (102) eine Sekundäransicht anzeigt, die ebenfalls die Live-Ansicht überlagert und dadurch weiter erweitert, wobei die Sekundäransicht einen Bereich der Umgebung darstellt, der das Zielsystem umgibt, und Symbole enthält, die das Zielsystem und das Feldelement darstellen.

**8.** Zielsystem (100) nach Anspruch 7, ferner mit einem Speicher (114), der eine Klassifizierung, die das Feldelement als ein Ziel identifiziert, sowie Information speichert, die eine dem Ziel zugewiesene Munition und einen der Munition zugeordneten minimalen Sicherheitsabstand anzeigt, und
wobei die Verarbeitungsschaltung (106) ferner dafür konfiguriert ist, auf den Speicher zuzugreifen, und dafür programmiert ist, zu veranlassen, dass das persönliche Displaysystem (102) die Sekundäransicht anzeigt, die eine Anzeige enthält, die den minimalen Sicherheitsabstand relativ zum Ziel anzeigt.

**9.** Zielsystem (100) nach Anspruch 7, wobei die Sekundäransicht auf dem Symbol zentriert ist, das das Zielsystem darstellt,

wobei die Verarbeitungsschaltung (106) ferner dafür programmiert ist, eine Entfernung vom Zielsystem zum Feldelement basierend auf dem geographischen Ort des Zielsystems und dem geographischen Ort des Feldelements zu bestimmen, und
wobei die Verarbeitungsschaltung (106) dafür programmiert ist, zu veranlassen, dass das persönliche Displaysystem (102) die Sekundäransicht anzeigt, die auf dem Symbol zentriert ist, das das Zielsystem darstellt, und wobei das Symbol, das das Feldelement darstellt, relativ zur Mitte der Sekundäransicht basierend auf der Entfernung vom Zielsystem zum Feldelement und zur relativen LOS vom Zielsystem zum Feldelement positioniert ist.

**10.** Verfahren (500) zum Verwenden eines Zielsystems (100) in einer physischen Umgebung, die ein Feldelement enthält, wobei das Verfahren die Schritte aufweist:

Erzeugen oder Ermöglichen (502) einer Live-Ansicht der physischen Umgebung, wobei die Live-Ansicht das Feldelement enthält und ein Sichtfeld aufweist, das auf einer Sichtlinie (LOS) des Zielsystems zentriert ist;
Messen (504) einer Lage des Zielsystems bezüglich eines Azimuts und einer Elevation, die die LOS des Zielsystems beschreiben, und einer Neigung des Zielsystems;
Bestimmen (506) einer relativen LOS vom Zielsystem zum Feldelement basierend auf der Lage und einem geographischen Ort des Zielsystems und einem geographischen Ort des Feldelements;
Bestimmen (508) einer relativen Position in der Live-Ansicht von der Mitte des Sichtfelds zum darin enthaltenen Feldelement basierend auf der relativen LOS; und
Anzeigen (510) einer Primäransicht, die die Live-Ansicht überlagert und dadurch erweitert, wobei die Primäransicht ein Symbol an der relativen Position enthält, das dadurch das Feldelement in der Live-Ansicht überlagert, wobei das Verfahren ferner die Schritte aufweist:

Messen einer Entfernung vom Zielsystem zu einem Orientierungspunkt in der physischen Umgebung; und
Bestimmen des geographischen Orts des Zielsystems basierend auf der Lage des Zielsystems, der Entfernung vom Zielsystem zum Orientierungspunkt und einem geographischen Ort des Orientierungspunkts.

**11.** Verfahren nach Anspruch 10, wobei das Feldelement eine Klassifizierung aus einer Vielzahl von Klassifizierungen aufweist, denen eine entsprechende Vielzahl von Symbolen zugeordnet sind, und
wobei das Anzeigen (510) der Primäransicht das Anzeigen der Primäransicht aufweist, die ein Symbol enthält, das der Klassifizierung des Feldelements zugeordnet ist.

**12.** Verfahren nach Anspruch 11, wobei das Anzeigen (510) der Primäransicht das Anzeigen der Primäransicht aufweist, die ferner eine Meldung bezüglich des Feldelements in einem Fall aufweist, in dem die relative Position und die Mitte des Sichtfelds miteinander ausgerichtet sind, wobei die Meldung aus einer Vielzahl von Meldungen basierend auf der Klassifizierung des Feldelements ausgewählt wird.

**13.** Verfahren nach Anspruch 11, wobei das Feldelement eines von mehreren Feldelementen in der physischen Umgebung ist und jedes der mehreren Feldelemente eine Klassifizierung aufweist,

wobei das Bestimmen (506) der relativen LOS das Bestimmen der relativen LOS vom Zielsystem (100) zu jedem der mehreren Feldelemente aufweist, und
wobei das Verfahren ferner das Identifizieren des Feldelements als ein Feldelement, das eine relative Position innerhalb des Sichtfelds aufweist, basierend auf der relativen LOS vom Zielsystem zum Feldelement aufweist.

**14.** Verfahren nach Anspruch 13, ferner mit dem Identifizieren eines anderen Feldelements als ein Feldelement, das eine relative Position außerhalb des Sichtfelds aufweist, basierend auf der relativen LOS vom Zielsystem (100) zum anderen Feldelement, und
wobei das Anzeigen (510) der Primäransicht das Anzeigen der Primäransicht aufweist, die ferner einen Pfeil enthält, der eine Drehrichtung von der LOS des Zielsystems zum anderen Feldelement anzeigt.

**Revendications**

**1.** Système de ciblage (100) pour l'utilisation dans un environnement physique comportant un élément de champ, le système de ciblage comprenant :

un système d'affichage personnel (102) configuré pour générer ou permettre une vue en direct de l'environnement physique, la vue en direct comprenant l'élément de champ et présentant un champ de vue centré sur une ligne de visée (LOS) du système de ciblage ;
une unité de détermination d'attitude (104) configurée pour mesurer une attitude du système de ciblage dans un angle azimutal et une élévation qui décrit la LOS du système de ciblage, et dans une inclinaison du système de ciblage ; et
un circuit de traitement (106) configuré pour recevoir l'attitude provenant de l'unité de détermination d'attitude, et programmé pour au moins :

déterminer une LOS relative du système de ciblage à l'élément de champ sur la base de l'attitude et d'un emplacement géographique du système de ciblage, et un emplacement géographique de l'élément de champ ;
déterminer une position relative dans la vue en direct du centre du champ de vue à l'élément de champ dedans sur la base de la LOS relative ; et
amener le système d'affichage personnel à afficher une vue primaire qui recouvre et augmente ainsi la vue en direct, la vue primaire comportant une icône dans la position relative qui recouvre ainsi l'élément de champ dans la vue en direct,
dans lequel le système de ciblage (100) comprend en outre un télémètre (112) configuré pour mesurer une plage allant du système de ciblage à un repère dans l'environnement physique, et
dans lequel le circuit de traitement (106) est en outre programmé pour déterminer l'emplacement géographique du système de ciblage sur la base de l'attitude du système de ciblage, de la plage allant du système de ciblage au repère, et d'un emplacement géographique du repère.

**2.** Système de ciblage (100) selon la revendication 1, dans lequel l'unité de détermination d'attitude (104) est configurée pour mesurer constamment l'attitude, et le circuit de traitement (106) est configuré pour recevoir constamment l'attitude, et programmé pour déterminer constamment la LOS relative sur la base de l'attitude, déterminer la position relative dans la vue en direct sur la base de la LOS relative, et amener le système d'affichage personnel (102) à afficher la vue primaire comportant l'icône dans la position relative.

**3.** Système de ciblage (100) selon l'une quelconque des revendications précédentes, comprenant en outre une mémoire (114) stockant une classification de l'élément de champ, la classification étant d'une pluralité de classifications associées à une pluralité respective d'icônes,
dans lequel le circuit de traitement (106) est en outre configuré pour accéder à la mémoire, et programmé pour amener le système d'affichage personnel (102) à afficher la vue primaire comportant l'icône associée à la classification de l'élément de champ.

4. Système de ciblage (100) selon la revendication 3, dans lequel le circuit de traitement (106) est programmé pour amener le système d'affichage personnel (102) à afficher la vue primaire comportant en outre une notification concernant l'élément de champ dans un cas, dans lequel la position relative et le centre du champ de vue sont co-alignés, la notification étant sélectionnée à partir d'une pluralité de notifications sur la base de la classification de l'élément de champ.

5. Système de ciblage (100) selon la revendication 3, dans lequel l'élément de champ est un d'une pluralité d'éléments de champ dans l'environnement physique, et la mémoire (114) stocke une classification de chacun de la pluralité d'éléments de champ,
dans lequel le circuit de traitement (106) est programmé pour déterminer la LOS relative depuis le système de ciblage à chacun de la pluralité d'éléments de champ, et dans lequel le circuit de traitement (106) est en outre programmé pour identifier l'élément de champ comme présentant une position relative dans le champ de vue sur la base de la LOS relative depuis le système de ciblage à l'élément de champ.

6. Système de ciblage (100) selon la revendication 5, dans lequel le circuit de traitement (106) est en outre programmé pour identifier un autre élément de champ comme présentant une position relative à l'extérieur du champ de vue sur la base de la LOS relative du système de ciblage à l'autre élément de champ, et
dans lequel le circuit de traitement (106) est programmé pour amener le système d'affichage personnel (102) à afficher la vue primaire qui comporte en outre une flèche indiquant une direction de rotation de la LOS du système de ciblage à l'autre élément de champ.

7. Système de ciblage (100) selon l'une quelconque des revendications précédentes, dans lequel le circuit de traitement (106) est en outre programmé pour amener le système d'affichage personnel (102) à afficher une vue secondaire qui recouvre aussi et augmente ainsi en outre la vue en direct, la vue secondaire décrivant une zone de l'environnement entourant le système de ciblage, et comportant des icônes qui représentent le système de ciblage et l'élément de champ.

8. Système de ciblage (100) selon la revendication 7, comprenant en outre une mémoire (114) stockant une classification qui identifie l'élément de champ comme une cible, et des informations qui indiquent une munition attribuée à la cible, et une distance sûre minimum associée à la munition, et
dans lequel le circuit de traitement (106) est en outre configuré pour accéder à la mémoire, et programmé pour amener le système d'affichage personnel (102) à afficher la vue secondaire comportant un indicateur qui indique la distance sûre minimum par rapport à la cible.

9. Système de ciblage (100) selon la revendication 7, dans lequel la vue secondaire est centrée sur l'icône qui représente le système de ciblage,

dans lequel le circuit de traitement (106) est en outre programmé pour déterminer une distance du système de ciblage à l'élément de champ sur la base de l'emplacement géographique du système de ciblage et de l'emplacement géographique de l'élément de champ, et
dans lequel le circuit de traitement (106) est programmé pour amener le système d'affichage personnel (102) à afficher la vue secondaire centrée sur l'icône qui représente le système de ciblage, et dans lequel l'icône qui représente l'élément de champ est positionnée par rapport au centre de la vue secondaire sur la base de la distance du système de ciblage à l'élément de champ, et la LOS relative du système de ciblage à l'élément de champ.

10. Procédé (500) d'utilisation d'un système de ciblage (100) dans un environnement physique comportant un élément de champ, le procédé comprenant :

la génération ou la permission (502) d'une vue en direct de l'environnement physique, la vue en direct comportant l'élément de champ et présentant un champ de vue centré sur une ligne de visée (LOS) du système de ciblage ;
la mesure (504) d'une attitude du système de ciblage dans un angle azimutal et une élévation qui décrit la LOS du système de ciblage, et dans une inclinaison du système de ciblage ;
la détermination (506) d'une LOS relative du système de ciblage à l'élément de champ sur la base de l'attitude et d'un emplacement géographique du système de ciblage, et d'un emplacement géographique de l'élément de champ ;
la détermination (508) d'une position relative dans la vue en direct depuis le centre du champ de vue à l'élément de champ dedans sur la base de la LOS relative ; et
l'affichage (510) d'une vue primaire qui recouvre et augmente ainsi la vue en direct, la vue primaire comportant une icône dans la position relative qui recouvre ainsi l'élément de champ dans la vue en direct,
dans lequel le procédé comprend en outre :

la mesure d'une plage allant du système de ciblage à un repère dans l'environnement physique ; et
la détermination de l'emplacement géographique du système de ciblage sur la base de l'attitude du système de ciblage, de la plage allant du système de ciblage au repère, et d'un emplacement géographique du repère.

11. Procédé selon la revendication 10, dans lequel l'élément de champ présente une classification d'une pluralité de classifications associées à une pluralité respective d'icônes, et
dans lequel l'affichage (510) de la vue primaire comporte l'affichage de la vue primaire comportant une icône associée à la classification de l'élément de champ.

12. Procédé selon la revendication 11, dans lequel l'affichage (510) de la vue primaire comporte l'affichage de la vue primaire comportant en outre une notification concernant l'élément de champ dans un cas, dans lequel la position relative et le centre du champ de vue sont co-alignés, la notification étant sélectionnée depuis une pluralité de notifications sur la base de la classification de l'élément de champ.

13. Procédé selon la revendication 11, dans lequel l'élément de champ est un d'une pluralité d'éléments de champ dans l'environnement physique, et chacun de la pluralité d'éléments de champ présente une classification,
dans lequel la détermination (506) de la LOS relative comporte la détermination de la LOS respective du système de ciblage (100) à chacun de la pluralité d'éléments de champ, et dans lequel le procédé comprend en outre l'identification de l'élément de champ comme présentant une position relative dans le champ de vue sur la base de la LOS relative du système de ciblage à l'élément de champ.

14. Procédé selon la revendication 13, comprenant en outre l'identification d'un autre élément de champ comme présentant une position relative à l'extérieur du champ de vue sur la base de la LOS relative du système de ciblage (100) à l'autre l'élément de champ, et
dans lequel l'affichage (510) de la vue primaire comporte l'affichage de la vue primaire qui comporte en outre une flèche indiquant une direction de rotation de la LOS du système de ciblage à l'autre élément de champ.

FIG. 1

FIG. 2

EP 3 287 736 B1

FIG. 3

EP 3 287 736 B1

FIG. 4

500

```
        ┌──────────────────────────────┐
  502   │  GENERATE / ENABLE LIVE VIEW OF A │
        │  PHYSICAL ENVIRONMENT INCLUDING A │
        │         FIELD ELEMENT            │
        └──────────────────────────────┘
                        │
        ┌──────────────────────────────┐
  504   │  MEASURE ATTITUDE OF THE TARGEING │
        │            SYSTEM                │
        └──────────────────────────────┘
                        │
        ┌──────────────────────────────┐
  506   │  DETERMINE RELATIVE LOS FROM THE  │
        │ TARGETING SYSTEM TO THE FIELD ELEMENT │
        └──────────────────────────────┘
                        │
        ┌──────────────────────────────┐
  508   │ DETERMINE RELATIVE POSITION IN THE LIVE │
        │  VIEW BASED ON THE RELATIVE LOS   │
        └──────────────────────────────┘
                        │
        ┌──────────────────────────────┐
  510   │  DISPLAY PRIMARY VIEW THAT OVERLAYS │
        │ AND THEREBY AUGMENTS THE LIVE VIEW │
        │    BASED ON THE RELATIVE LOS     │
        └──────────────────────────────┘
```

FIG. 5

FIG. 6

600

SHARING (ASYNCHRONOUS)

RECEIVE FIELD ELEMENT GEOGRAPHIC LOCATION FROM ANOTHER TACTICAL UNIT — 608

OPERATOR PRE-MISSION PLANNING — 606

OPERATOR GEOLOCATION

IDENTIFY AND CENTER FIELD ELEMENT IN LIVE VIEW — 606

INVOKE RANGEFINDER TO FIND RANGE TO FIELD ELEMENT — 608

OPERATOR-INVOKED OR AUTOMATIC-ON RANGING FIELD ELEMENT GEOLOCATION — 610

PERSISTENT UPDATE OF TRACKING SYSTEM GEOGRAPHIC LOCATION, ATTITUDE — 602

GEOGRAPHIC LOCATION, ATTITUDE — 604

LANDMARK DATA, TACTICAL INFORMATION, BATTLEFIELD ELEMENT DATA — 612

DETERMINE GEOGRAPHIC RELATIONSHIPS AMONG FIELD ELEMENTS, INCLUDING TARGETING SYSTEM — 614

PERSISTENT DISPLAY OF PRIMARY VIEW INCLUDING FIELD ELEMENT ICONS AND NOTIFICATIONS — 616

PERSISTENT DISPLAY OF SECONDARY VIEW INCLUDING ICONS AND RISK-ESTIMATE INDICATORS — 618

FIG. 7

FIG. 8

FIG. 9

**EP 3 287 736 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8939366 B1
- WO 2015066531 A1
- US 2008049012 A1